# FASCICULE DE BREVET EUROPEEN

(11) **EP 2 904 950 B1**
(45) Date de publication et mention de la délivrance du brevet: **21.12.2016**
(21) Numéro de dépôt: 15154370.9
(22) Date de dépôt: 09.02.2015
(51) Int. Cl.: A47J 27/08

(54) **Autocuiseur à trou d'homme avec moyen de retenue du couvercle**
Schnellkochtopf mit Sichtloch und Rückhaltemittel des Deckels
Pressure cooker with inspection cover having means for holding the lid

(30) Priorité: 10.02.2014 FR 1451015
(43) Date de publication de la demande: 12.08.2015
(73) Titulaire: SEB S.A., 69130 Ecully (FR)
(72) Inventeur: Bodin, Pierre-Louis Georges Henri, 21000 Dijon (FR); Prado Neto, Adélio, 1009-000 Sao Paulo-SP (BR)
(74) Mandataire: Weber, Jean-François

(56) Documents cités:
- FR-A1- 2 796 541
- US-A- 2 549 243

## Description

La présente invention se rapporte au domaine technique général des autocuiseurs à trou d'homme (c'est à dire à couvercle rentrant) équipés d'une poignée de couvercle et d'une poignée de cuve destinées à être superposées pour permettre le verrouillage du couvercle sur la cuve.

La présente invention concerne plus précisément un autocuiseur à trou d'homme comprenant un couvercle rentrant, une poignée de couvercle attachée audit couvercle, une cuve de cuisson pourvue d'un fond, ainsi qu'une poignée de cuve attachée à ladite cuve, lesdites poignées de couvercle et de cuve étant pourvues de moyens de verrouillage complémentaires capables de coopérer, lorsque le couvercle se trouve dans une position de pré-verrouillage dans laquelle les poignées de cuve et de couvercle sont sensiblement superposées, pour verrouiller le couvercle relativement à la cuve afin d'autoriser l'autocuiseur à monter en pression.

Les autocuiseurs dits *« à trou d'homme »,* ou encore à couvercle rentrant, sont largement connus et présentent un certain nombre d'avantages relatifs notamment à leur simplicité et économie de fabrication, conduisant à la réalisation de produits particulièrement simples et bon marché.

Les autocuiseurs à trou d'homme connus comprennent une cuve à laquelle est attachée une poignée de cuve, ainsi qu'un couvercle auquel est attachée une poignée de couvercle par l'intermédiaire d'une lame ressort flexible. Le couvercle comporte un bord roulé qui forme une rainure accueillant un joint d'étanchéité.

Comme cela est bien connu, la cuve et le couvercle des autocuiseurs à trou d'homme présentent chacun une forme légèrement ovalisée permettant au couvercle d'être inséré à l'intérieur de la cuve pour venir occuper, après rotation et mise en place du couvercle dans la cuve, une position de fermeture étanche dans laquelle le bord roulé du couvercle est à l'intérieur de la cuve, de sorte que le joint d'étanchéité est interposé entre le bord roulé et le bord rentrant périphérique de la cuve.

Afin de verrouiller le couvercle sur la cuve, les autocuiseurs à trou d'homme connus mettent généralement en oeuvre un dispositif d'accrochage permettant d'attacher l'extrémité libre de la poignée de couvercle à l'extrémité libre de la poignée de cuve. Ainsi, pour fermer et verrouiller un tel autocuiseur, l'utilisateur met en place le couvercle rentrant dans la cuve puis, par rotation du sous-ensemble couvercle/poignée de couvercle, amène le couvercle dans une position de pré-verrouillage dans laquelle la poignée de couvercle vient se superposer à la poignée de cuve. L'utilisateur n'a plus alors qu'à exercer une pression verticale sur la poignée de couvercle pour faire fléchir la lame ressort, afin de permettre l'engagement d'une pièce d'accrochage équipant l'extrémité libre de la poignée de couvercle sur une butée correspondante équipant l'extrémité libre de la poignée de cuve. Cette manipulation permet d'effectuer le verrouillage complet de l'autocuiseur, autorisant ce dernier à monter en pression.

Un tel autocuiseur donne globalement satisfaction, en particulier sur le plan de la fiabilité et de la simplicité d'utilisation. Il présente toutefois un inconvénient sérieux, qui découle essentiellement du caractère instable de la position de pré-verrouillage. En effet, tant que l'engagement de la pièce d'accrochage et de la butée équipant respectivement les extrémités libres des poignées de couvercle et de cuve n'est pas réalisé, le couvercle a spontanément tendance, lorsqu'il se trouve dans sa position de pré-verrouillage, à tomber au fond de la cuve. L'utilisateur doit donc, lorsque le couvercle se trouve en position de pré-verrouillage, exercer un effort manuel sur la poignée de couvercle pour empêcher la chute du couvercle et maintenir ce dernier dans sa position de pré-verrouillage, afin de pouvoir opérer l'engagement mutuel de la pièce d'accrochage et de la butée (ou inversement le désengagement de ces pièces lors du déverrouillage).

Toutefois, si l'utilisateur omet d'exercer cet effort, ou effectue un faux mouvement qui fait que la poignée de couvercle lui échappe alors que le couvercle se trouve en position de pré-verrouillage, le couvercle chutera alors dans la cuve contre le fond de cette dernière. Cela représente bien entendu un inconvénient sérieux, puisque si la cuve est alors remplie d'aliments (et en particulier d'aliments liquides), le couvercle sera alors souillé par le contenu de la cuve.

Dans un tel cas de figure, l'utilisateur sera contraint de procéder à un nettoyage fastidieux du couvercle et des alentours (des aliments pouvant en effet être projetés à l'extérieur de la cuve sous l'effet de la chute intempestive du couvercle). Il existe en outre un risque que lors de l'immersion intempestive du couvercle dans le contenu de la cuve, des particules alimentaires solides ou semi-solides pénètrent dans la soupape de sécurité et/ou la soupape de régulation équipant le couvercle, ce qui peut nuire au bon fonctionnement de cette dernière si, lors du nettoyage, toutes les particules en question ne sont pas correctement éliminées.

Par ailleurs, un positionnement adéquat du couvercle au moment de la manipulation de verrouillage décrite ci-avant est essentiel pour assurer la sécurité et l'étanchéité de l'ensemble cuve/couvercle. Pour cela, l'utilisateur utilise la position relative des poignées de cuve et de couvercle comme un repère visuel lui permettant d'apprécier si le couvercle est correctement positionné relativement à la cuve lors de l'opération de verrouillage. En effet, le verrouillage étanche ne pourra s'opérer que si les poignées de cuve et de couvercle sont superposées (position de pré-verrouillage). Toutefois, ce repérage visuel s'avère en pratique insuffisant pour garantir à l'utilisateur que le couvercle se trouve bien en position adéquate pour le verrouillage. En effet, il suffit que les poignées de cuve et de couvercle soient légèrement décalées angulairement, même de façon quasi-imperceptible à l'oeil, pour que cela contrarie le verrouillage correct du couvercle relativement à la cuve.

Afin de remédier à ce problème, il a été proposé de perfectionner les autocuiseurs connus décrits ci-avant en les dotant d'un dispositif de guidage latéral permettant de faciliter l'alignement des poignées de cuve et de couvercle, par limitation du jeu latéral de la poignée de couvercle relativement à la poignée de cuve. Toutefois, il peut arriver que la poignée de cuve et la poignée de couvercle, bien que correctement alignées grâce notamment au perfectionnement décrit précédemment, soient très légèrement décalées longitudinalement. Un tel décalage longitudinal, même très léger, est en pratique de nature à engendrer différentes situations dans lesquelles l'obtention d'un verrouillage correct est contrariée. Dans certaines situations, l'utilisateur pourra ainsi essayer en vain d'accrocher correctement les extrémités des poignées de cuve et de couvercle avec le verrou, et n'y parviendra pas, sans d'ailleurs forcément comprendre la raison de ce dysfonctionnement.

L'utilisateur pourrait même dans ce cas être tenté d'exercer un effort inconsidéré de fléchissement de la poignée de couvercle qui risque de détériorer l'autocuiseur. Dans d'autres situations, l'utilisateur pourra éventuellement parvenir à attacher les poignées de cuve et de couvercle, mais l'étanchéité entre le couvercle et la cuve ne sera pas assurée du fait du décalage longitudinal du couvercle.

Dans tous les cas, le déficit d'ergonomie dont souffrent les appareils existants décrits ci-avant est de nature à entraîner des difficultés d'usage (liées notamment à la chute intempestive du couvercle dans la cuve évoquée ci-avant, ou au problème de positionnement du couvercle relativement à la cuve), ou encore une détérioration de l'autocuiseur, voire même des risques pour l'utilisateur.

Le document FR-2 796 541 décrit un autocuiseur à couvercle rentrant pourvu de moyens de verrouillage/déverrouillage du couvercle sur la cuve comprenant une came et une butée solidaires respectivement de la poignée de couvercle et de la poignée de cuve et aptes à être verrouillées lorsque les poignées sont superposées par action de pression des poignées l'une contre l'autre. En l'absence de verrouillage, le couvercle a toutefois tendance à chuter contre le fond de la cuve.

Les objets assignés à l'invention visent en conséquence à porter remède aux différents inconvénients énumérés précédemment et à proposer un nouvel autocuiseur à trou d'homme dont l'ergonomie et la sécurité de fermeture et d'ouverture sont grandement améliorées, et dont la conception extrêmement simple et bon marché limite significativement le risque de voir le couvercle chuter intempestivement dans la cuve lors du verrouillage ou du déverrouillage.

Un autre objet de l'invention vise à proposer un nouvel autocuiseur à trou d'homme dont la conception permet de limiter les risques d'erreurs de positionnement du couvercle relativement à la cuve lors du verrouillage.

Un autre objet de l'invention vise à proposer un nouvel autocuiseur à trou d'homme dont la construction est particulièrement simple et robuste.

Un autre objet de l'invention vise à proposer un nouvel autocuiseur à trou d'homme qui, tout en étant d'une utilisation particulièrement intuitive, est facile et bon marché à fabriquer.

Un autre objet de l'invention vise à proposer un nouvel autocuiseur à trou d'homme particulièrement compact.

Un autre objet de l'invention vise à proposer un nouvel autocuiseur à trou d'homme qui facilite de manière très significative le positionnement du couvercle sur la cuve en vue de sa fermeture, tout en présentant un aspect et un mode d'utilisation très proches de ceux des autocuiseurs à trou d'homme classiques.

Les objets assignés à l'invention sont atteints à l'aide d'un autocuiseur à trou d'homme comprenant un couvercle rentrant, une poignée de couvercle attachée audit couvercle, une cuve de cuisson pourvue d'un fond, ainsi qu'une poignée de cuve attachée à ladite cuve, lesdites poignées de couvercle et de cuve étant pourvues de moyens de verrouillage complémentaires capables de coopérer, lorsque le couvercle se trouve dans une position de pré-verrouillage dans laquelle les poignées de cuve et de couvercle sont sensiblement superposées, pour verrouiller le couvercle relativement à la cuve afin d'autoriser l'autocuiseur à monter en pression, ledit autocuiseur étant caractérisé en ce qu'il comprend également un moyen de retenue qui autorise ledit couvercle à atteindre spontanément, à partir de sa position de pré-verrouillage et en l'absence de coopération desdits moyens de verrouillage complémentaires, une position stable de retenue dans laquelle ledit moyen de retenue maintient par lui-même le couvercle à distance dudit fond.

D'autres particularités et avantages de l'invention apparaîtront et ressortiront plus en détails à la lecture de la description faite ci-après, en référence aux dessins annexés, donnés à titre d'exemples illustratifs et non limitatifs, dans lesquels :
- la figure 1 illustre, selon une vue de face, un autocuiseur à trou d'homme conforme à l'invention, avec son couvercle qui se trouve en configuration de pré-verrouillage.
- La figure 2 est une vue de dessus de l'autocuiseur de la figure 1.
- La figure 3 est une vue en coupe de l'autocuiseur de la figure 1, mais dont le couvercle est cette fois complètement verrouillé relativement à la cuve, de façon à former une enceinte de cuisson sensiblement étanche capable de monter en pression.
- La figure 4 est une vue en perspective agrandie d'un détail des figures 1 à 3.
- La figure 5 est une vue en perspective agrandie d'un détail des figures 1 à 3.
- La figure 6 illustre, selon une vue en perspective, un détail de réalisation de l'autocuiseur des figures 1 à 5.
- La figure 7 illustre, selon une vue de côté, le détail de réalisation de la figure 6.
- La figure 8 illustre, selon une vue de face, l'autocuiseur des figures 1 à 7 dont le couvercle se trouve cette fois dans une position stable de retenue, dans laquelle un moyen de retenue maintient le couvercle à distance du fond de la cuve.
- La figure 9 illustre, selon une vue de dessus, l'autocuiseur de la figure 8.
- La figure 10 illustre, selon une vue en perspective agrandie, un détail de réalisation de l'autocuiseur illustré aux figures 8 et 9.
- La figure 11 est une vue en coupe de l'autocuiseur des figures 8 à 10.
- La figure 12 illustre est une vue agrandie d'un détail de la figure 11.

L'invention concerne un autocuiseur 1 à trou d'homme comprenant un couvercle rentrant 2, qui présente une forme générale sensiblement ovale et de préférence légèrement bombée. Dans l'exemple préférentiel illustré aux figures, le couvercle rentrant 2 comprend une paroi supérieure 2A sensiblement ellipsoïdale, laquelle présente un grand diamètre et un petit diamètre, et est de préférence sensiblement bombée. Le couvercle rentrant 2 illustré aux figures comprend en outre un bord tombant 2B qui s'étend vers le bas à partir de la périphérie de la paroi supérieure 2A et se termine avantageusement par un bord roulé 2C qui forme un logement d'accueil pour un joint d'étanchéité annulaire 2D. Le joint d'étanchéité annulaire 2D enserre ainsi le bord tombant 2B, sur la face externe de ce dernier, tout en étant logé dans une rainure annulaire sensiblement périphérique formée par le bord roulé 2C, comme illustré aux figures. Le couvercle rentrant 2 est de préférence réalisé en un matériau métallique, tel que l'aluminium ou l'acier inoxydable. Avantageusement, et comme cela est bien connu en tant que tel, des organes de gestion de la pression sont embarqués sur le couvercle 2. Par exemple, comme illustré aux figures, l'autocuiseur 1 comporte une soupape de régulation de pression 4, permettant de maintenir le niveau de la pression régnant au sein de l'autocuiseur 1 à une valeur de consigne prédéterminée.

La soupape de régulation de pression 4 est par exemple une soupape « *à poids* » montée sur le couvercle 2, au centre de ce dernier, et comprend d'une part un conduit d'échappement qui s'étend selon l'axe central vertical X-X' du couvercle 2, et d'autre part un capuchon lesté rotatif emmanché sur le conduit. Bien entendu, l'invention n'est pas limitée à la mise en oeuvre d'une soupape à poids en tant que soupape de régulation de pression, et il est par exemple tout à fait envisageable de recourir à d'autres types de soupape (soupape à ressort par exemple) sans pour autant sortir du cadre de l'invention. Avantageusement, l'autocuiseur 1 comporte également une soupape de sécurité 5, qui se présente par exemple sous la forme d'une soupape à corps éjectable, et qui est montée avantageusement vers la périphérie du couvercle 2, sur ce dernier, comme illustré aux figures.

L'autocuiseur 1 comprend également une poignée de couvercle 3 attachée audit couvercle 2. L'autocuiseur 1 comprend ainsi un sous-ensemble unitaire de couvercle qui inclut au moins lesdits couvercle 2 et poignée de couvercle 3. La poignée de couvercle 3 est réalisée avantageusement en matière plastique et s'étend de préférence sensiblement radialement vers l'extérieur du couvercle 2. Dans l'exemple préférentiel illustré aux figures, la poignée de couvercle 3 s'étend sensiblement selon la direction du grand diamètre du couvercle rentrant 2. De préférence, l'autocuiseur 1 comprend un bras 6 flexible qui est avantageusement réalisé en un matériau métallique (acier ou aluminium par exemple) et est de façon particulièrement préférée formé par une lame ressort. Comme illustré aux figures, la poignée de couvercle 3 est attachée au couvercle 2 par le bras 6 flexible. La poignée de couvercle 3 est ainsi rendue solidaire du couvercle 2 de façon permanente par le bras 6 flexible, lequel s'étend longitudinalement, en l'espèce dans le prolongement de la poignée de couvercle 3, selon le grand diamètre du couvercle 2, entre une première extrémité avantageusement encastrée dans le corps même de la poignée de couvercle 3, de sorte que cette dernière forme dans ce cas un habillage qui entoure une portion extrémale libre du bras 6, et une seconde extrémité attachée, par exemple par vissage, soudure ou tout autre moyen, au couvercle 2, et plus précisément à la partie centrale de ce dernier, comme illustré aux figures. Dans ce cas, le sous-ensemble unitaire de couvercle inclut le couvercle rentrant 2, la poignée de couvercle 3 et le bras 6 flexible et présente globalement une forme de raquette avec un manche (le bras 6), une poignée (la poignée de couvercle 3) et un tamis (le couvercle 2).

Comme illustré aux figures, l'autocuiseur 1 comprend également une cuve de cuisson 7, qui est par exemple réalisée en un matériau métallique, du genre aluminium ou acier inoxydable. En l'espèce, la cuve de cuisson 7 est pourvue d'un fond 7A, par exemple de forme sensiblement discoïde, destiné à reposer sur une source de chauffe externe, du genre plaque de cuisson. La cuve 7 comporte en outre un bord rentrant 7C qui délimite une ouverture de forme sensiblement ovale, complémentaire de la forme du couvercle 2. Comme illustré aux figures, la cuve 7 comprend une paroi latérale annulaire 7B qui s'élève sensiblement verticalement à partir et la périphérie du fond 7A, ladite paroi latérale 7B se terminant par le bord rentrant 7C. Le bord rentrant 7C, qui est en l'espèce formé par le repli vers l'intérieur de la portion extrémale libre de la paroi latérale 7B, surplombe le fond 7A et définit une ouverture de forme sensiblement ellipsoïdale, avec un petit diamètre et un grand diamètre respectivement conjugués aux petit et grand diamètres du couvercle 2. Le reste de la cuve 7 (fond 7A et paroi latérale annulaire 7B) présente quant à lui avantageusement une symétrie de révolution selon un axe vertical central Y-Y'.

De manière classique, l'autocuiseur 1 comprend une poignée de cuve 8, de préférence réalisée en matière plastique, et qui est attachée à la cuve 7. L'autocuiseur 1 comprend ainsi un sous-ensemble unitaire de cuve incluant au moins lesdites cuve 7 et poignée de cuve 8. La poignée de cuve 8 en question présente avantageusement une forme sensiblement allongée. Elle s'étend, de préférence radialement relativement à la cuve 7, entre une première extrémité attachée à la cuve 7 et une deuxième extrémité libre. De façon préférentielle, comme illustré aux figures, ladite poignée de cuve 8 s'étend selon la direction du grand diamètre de l'ouverture ovale d'accès à l'intérieur de la cuve définie par le bord rentrant 7C de la cuve 7. La poignée de cuve 8 est avantageusement attachée à la paroi latérale annulaire 7B, par tout moyen approprié. Par exemple, la poignée de cuve 8 inclut une portion de préhension 8A, en matière plastique, destinée à être saisie manuellement, et une pièce de fixation 9, en matériau métallique, qui assure l'interface de liaison entre la cuve et la portion de préhension 8A. La pièce de fixation 9 se présente par exemple sous la forme d'une platine en acier inoxydable ou en aluminium, attachée par vissage (ou tout autre moyen) à la portion de préhension 8A et fixée par tout moyen approprié (vissage, soudage, rivetage, etc.) à la paroi latérale 7B de la cuve 7. Ainsi, dans l'exemple préférentiel illustré aux figures, lesdites poignées de couvercle 3 et de cuve 8 présentent toutes deux une forme allongée, longiligne.

De préférence, comme illustré aux figures, l'autocuiseur 1 comprend, outre la poignée de couvercle 3, qui constitue en l'espèce la poignée principale, une oreille de préhension 14, qui forme une poignée secondaire disposée avantageusement de façon diamétralement opposée à la poignée de cuve 8. Avantageusement, cette oreille de préhension 14 ne présente pas, contrairement à la poignée de cuve 8 illustrée aux figures, un caractère allongé, mais se présente au contraire sous la forme d'un élément relativement large et peu profond destiné à être saisi manuellement, par exemple avec la main gauche, tandis que la poignée de cuve 8 est quant à elle destinée à être enserrée par l'autre main (par exemple la main droite).

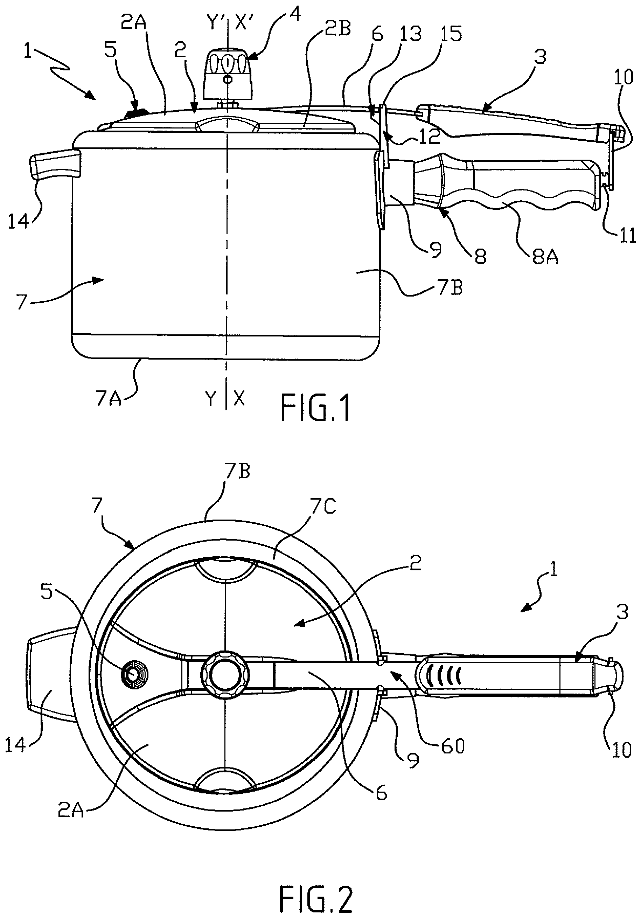

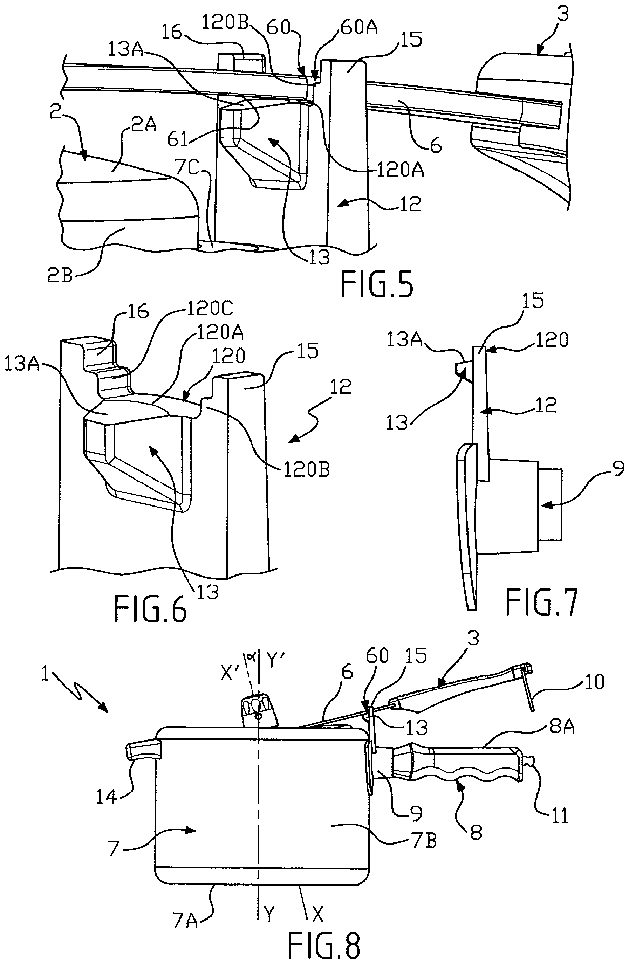

Comme cela est bien connu en tant que tel et comme illustré aux figures 6 à 8, le couvercle 2 est destiné à être verrouillé sur la cuve 7 lorsque la poignée de couvercle 3 est superposée à la poignée de cuve 8, pour former une enceinte de cuisson suffisamment étanche pour monter en pression. A cette fin, lesdites poignées de couvercle 3 et de cuve 8 sont pourvues de moyens de verrouillage complémentaires capables de coopérer, lorsque le couvercle 2 se trouve dans une position de pré-verrouillage (illustrée aux figures 1 et 2 par exemple) dans laquelle les poignées de cuve 8 et de couvercles 3 sont sensiblement superposées, pour verrouiller le couvercle 2 relativement à la cuve 7 afin d'autoriser l'autocuiseur 1 à monter en pression, c'est-à-dire à permettre à l'enceinte de cuisson formée par l'association du couvercle 2 et de la cuve 7 de monter en pression.

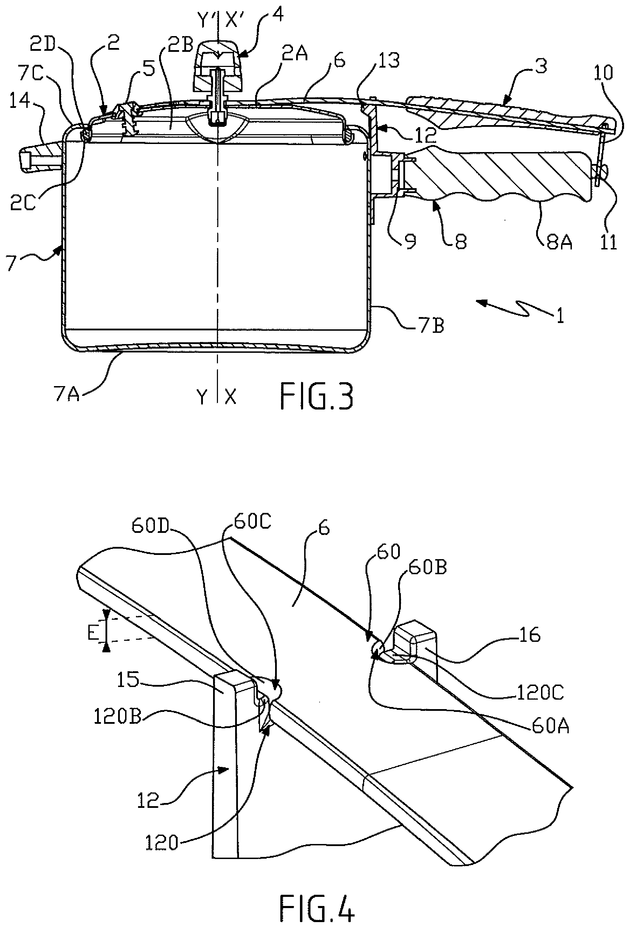

Ainsi, la position de pré-verrouillage est une position de préparation au verrouillage complet de l'appareil, dans laquelle le couvercle 2 est inséré dans la cuve 7 (cf. figure 3), avec les poignées de couvercle 3 et de cuve 8 sensiblement superposées. Dans la position de pré--verrouillage, les fond 7A et le couvercle 2 s'étendent selon des plans moyens d'extension respectifs qui sont sensiblement parallèles, l'axe vertical central X-X' du couvercle 2 et l'axe vertical central Y-Y' de la cuve 7 étant alors confondus. Dans la position de pré-verrouillage, le joint 2D est en outre sensiblement entièrement contenu dans la cuve 7, et est en l'occurrence interposé entre le bord roulé 2C et le bord rentrant 7C de la cuve 7, contre la face intérieure duquel il vient en appui, par l'intérieur de la cuve 7.

L'atteinte, par le couvercle 3, de la position de pré-verrouillage rend alors possible la coopération des moyens de verrouillage complémentaires associés aux poignées de couvercle 3 et de cuve 8, ladite coopération permettant en l'occurrence d'attacher ensemble lesdites poignées de couvercle 3 et de cuve 8 afin ainsi de verrouiller le couvercle 2 relativement à la cuve 7 afin d'autoriser la montée en pression de l'autocuiseur 1.

Lesdits moyens de verrouillage complémentaires sont donc avantageusement portés par les poignées de couvercle 3 et de cuve 8, lesquelles assurent donc une double fonction (préhension et verrouillage). Par exemple, lesdits moyens de verrouillage complémentaires comprennent une boucle 10 attachée à pivotement sur la poignée de couvercle 3, à l'extrémité libre de cette dernière, et un plot d'amarrage 11 attaché à la poignée de cuve 8, de façon à s'étendre à partir de l'extrémité libre de ladite poignée de cuve 8, dans la continuité de cette dernière (comme illustré aux figures). La boucle 10 est conçue pour venir capturer le plot d'amarrage 11 de façon à attacher mutuellement les poignées de cuve 8 et de couvercle 3.

Les moyens de verrouillage 10, 11 en question sont avantageusement agencés pour permettre l'opération de verrouillage suivante :
- Une fois le couvercle 2 placé en position de pré-verrouillage, avec les poignées de couvercle 3 et de cuve 8 superposées, lesdites poignées 3, 8 sont soumises à un effort de pression manuelle permettant de les rapprocher l'une de l'autre, ce qui est permis notamment par la déflexion élastique du bras 6, jusqu'à permettre l'engagement du plot 11 dans la boucle 10.
- Une fois le plot 11 capturé dans la boucle 10, la pression manuelle de rapprochement des poignées peut cesser, ce qui entraîne un retour élastique vers le haut de la poignée de couvercle 3, permettant à la boucle 10 solidaire de la poignée de couvercle 3 d'exercer en permanence un effort sur le plot 11, ledit effort contribuant à garantir l'engagement du plot 11 dans la boucle 10.

Afin de limiter tout risque de désengagement intempestif de la boucle 10 et du plot 11, ce dernier est avantageusement pourvu d'une gorge circulaire destinée à accueillir la boucle 10, comme cela ressort des figures.

Afin de procéder au déverrouillage, il suffit à l'utilisateur d'exercer à nouveau un effort manuel de rapprochement des poignées de couvercle 3 et de cuve 8, de façon à relâcher l'effort exercé par la boucle 10 sur le plot 11 et ainsi permettre à l'utilisateur d'agir sur la boucle 11 en vue de la faire légèrement pivoter pour la désengager du plot 11.

Bien évidemment, l'invention n'est absolument pas limitée à des moyens de verrouillage/déverrouillage formés par un ensemble boucle/plot comme décrit ci-avant. Il est par exemple tout à fait envisageable, sans pour autant qu'on sorte du cadre de l'invention, que les moyens de verrouillage/déverrouillage comprennent plutôt une came liée à la poignée de couvercle et une butée liée à la poignée de cuve, de façon que la came et la butée puissent être verrouillées lorsque les poignées sont simplement pressées l'une contre l'autre.

En tout état de cause, il est particulièrement préféré de recourir à un moyen de verrouillage/déverrouillage utilisant notamment la faculté de déflexion du bras 6, et les propriétés de retour élastique qui en découlent, pour mettre en oeuvre le verrouillage/déverrouillage.

Dans le mode de réalisation illustré aux figures, la position de pré-verrouillage est une position instable, de sorte que le maintien du couvercle 2 en position de pré-verrouillage nécessite, tant que lesdits moyens de verrouillage complémentaires 10,11 ne coopèrent pas, l'application d'un effort de maintien sur la poignée de couvercle 3 pour empêcher le couvercle 2 de basculer en direction du fond 7A sous l'effet de son propre poids. De ce fait, dans le mode de réalisation illustré aux figures, l'utilisateur doit impérativement appliquer manuellement sur la poignée de couvercle 3 un effort tendant à rapprocher ladite poignée de couvercle 3 de la poignée de cuve 8, afin de surmonter l'effort de rappel exercé par le poids du couvercle 2 et maintenir ainsi ce dernier en position de pré-verrouillage. En l'absence d'application d'un tel effort de maintien et en l'absence de coopération des moyens de verrouillage complémentaires 10,11, le couvercle 2 aura tendance à quitter spontanément, sous l'effet de son poids, la position de pré-verrouillage et basculera à l'intérieur de la cuve 7 en direction du fond 7A. L'utilisateur doit donc, pour éviter au couvercle 2 de tomber en direction du fond 7A, exercer provisoirement un effort suffisant (par exemple vertical descendant) sur la poignée de couvercle 3, jusqu'à ce que les moyens de verrouillage complémentaires 10, 11 coopèrent (comme illustré à la figure 3). En effet, une fois que la coopération entre les moyens de verrouillage complémentaires 10,11 est établie, les poignées de couvercle 3 et de cuve 8 sont alors assujetties l'une à l'autre, ce qui permet d'immobiliser le couvercle 2 relativement à la cuve 7. En revanche, si l'utilisateur lâche, de façon intentionnelle ou non, la poignée de couvercle 3 alors que le couvercle 2 se trouve en position de pré-verrouillage et que les moyens de verrouillage complémentaires 10,11 ne coopèrent pas encore, le couvercle 2 basculera spontanément à l'intérieur de la cuve 7 et chutera en direction du fond 7A.

Avantageusement, l'autocuiseur 1 comprend un support 12 attaché à la cuve 7 (par exemple attaché à la pièce de fixation 9), sur et contre lequel ledit bras 6 est destiné à reposer localement lorsque le couvercle 2 se trouve dans sa position de pré-verrouillage, comme illustré aux figures 1 à 4 par exemple. La présence du support 12 permet en particulier de procurer un effet de levier permettant de venir plaquer le joint d'étanchéité 2D contre la face interne du bord rentrant 7C. Le recours à un support 12 formant un point d'appui pour le bras 6 flexible, afin de générer un effet de levier, n'est toutefois pas obligatoire, même s'il est préféré, et il est par exemple tout à fait envisageable que l'autocuiseur 1 en soit dépourvu, sans pour autant que l'on sorte du cadre de l'invention. Le support 12 est de préférence attaché à la poignée de cuve 8, par exemple au niveau de la première extrémité de celle-ci. Avantageusement, ledit support 12, qui fait en l'espèce partie du sous-ensemble de cuve, forme avec la poignée de cuve 8 un bloc unitaire attaché à la cuve 7. De préférence, le support 12 vient de matière avec la pièce de fixation 9, de façon à former avec cette dernière une pièce d'un seul tenant, de préférence entièrement métallique (acier inoxydable ou aluminium par exemple). Avantageusement, le support 12 est fixé, de préférence directement, à la cuve 7. Par exemple, le support 12 comprend une patte (de préférence rigide, par exemple en métal) qui est rivetée ou vissée à la paroi latérale 7B de la cuve 7. Le support 12 s'étend de préférence sensiblement verticalement, en l'espèce parallèlement à la paroi latérale 7B, entre une extrémité inférieure solidaire de la cuve 7 et une extrémité supérieure libre, située par exemple à une altitude sensiblement supérieure à celle de l'ouverture ovale de la cuve 7, pour procurer l'effet de levier évoqué ci-avant. Ainsi, dans le mode de réalisation préférentiel illustré aux figures, la poignée de cuve 8 s'étend entre une première extrémité attachée à la cuve 7 et une deuxième extrémité libre (qui porte en l'occurrence le plot 11), l'extrémité inférieure du support 12 étant en l'occurrence attachée à la poignée de cuve 8, au niveau de la première extrémité de celle-ci.

L'autocuiseur 1 selon l'invention comprend également un moyen de retenue qui autorise le couvercle 2 à atteindre spontanément, à partir de sa position de pré-verrouillage et en l'absence de coopération desdits moyens de verrouillage complémentaires 10, 11, une position stable de retenue (illustrée aux figures 8 à 12) dans laquelle ledit moyen de retenue maintient par lui-même le couvercle 2 à distance du fond 7A. Cela signifie que le moyen de retenue est conçu pour empêcher directement ou indirectement le couvercle 2 de chuter, à l'intérieur de la cuve 7, contre le fond 7A, si aucun effort externe (qu'il s'agisse d'un effort manuel exercé par un utilisateur sur la poignée de couvercle 3 ou de l'effort de verrouillage exercé par la coopération des moyens de verrouillage complémentaires 10, 11) ne retient le couvercle 2 dans sa position de pré-verrouillage.

Grâce à la présence du moyen de retenue, le couvercle 2 sera automatiquement et spontanément retenu, indépendamment de toute intervention de l'utilisateur, à une distance H du fond 7A qui est de préférence prédéterminée et suffisante pour éviter que le couvercle 2 ne rentre en contact avec les aliments susceptibles d'être contenus dans la cuve 7. Par exemple, la distance H séparant le couvercle 2 du fond 7A lorsque le couvercle 2 se trouve dans sa position stable de retenue représente au moins le tiers, de préférence au moins la moitié, et de façon encore plus préférentielle au moins 60 % de la hauteur totale H1 de la cuve 7. Ainsi, si l'utilisateur, pour une raison ou pour une autre, cesse de maintenir manuellement le couvercle 2 dans sa position de pré-verrouillage alors que les moyens de verrouillage complémentaires 10,11 ne coopèrent pas encore (comme dans la figure 1), le couvercle 2 se retrouvera spontanément dans la position stable de retenue, dans laquelle il est soumis à l'action du moyen de retenue qui l'empêche de s'approcher à moins d'une distance prédéterminée H du fond 7A.

De préférence, lesdites position de pré-verrouillage et position stable de retenue sont distinctes. Dans ce cas, le couvercle 2 est conçu pour passer de la position de pré-verrouillage à la position stable de retenue en opérant un mouvement qui résulte de préférence exclusivement de l'effort exercé par le poids du couvercle 2 sur ce dernier.

Avantageusement, le couvercle 2 est conçu pour passer de la position de pré-verrouillage à la position stable de retenue par un mouvement qui inclut un basculement en direction du fond 7A sous l'effet du poids du couvercle 2. Dans ce mode de réalisation avantageux illustré aux figures, le couvercle 2 passera de la position de pré-verrouillage à la position stable de retenue par pivotement dans le plan vertical relativement à l'axe de pivotement situé à l'interface de contact entre le support 12 et le bras 6. Plus précisément, le sous-ensemble de couvercle pivotera relativement au support 12 de telle sorte que le couvercle 2 basculera vers le bas tandis que la poignée de couvercle 3, par effet de levier, basculera vers le haut. Dans ce mode de réalisation préférentiel, lesdits fond 7A et couvercle 2 s'étendent selon des plans moyens d'extension respectifs qui sont inclinés l'un par rapport à l'autre lorsque le couvercle 2 se trouve dans la position stable de retenue. Il existe ainsi, lorsque le couvercle 2 se trouve en position stable de retenue, un décalage angulaire α entre les axes centraux X-X', Y-Y' respectivement associés au couvercle 2 et à la cuve 7 (cf. figure 8). Ainsi, si l'utilisateur laisse échapper par mégarde la poignée de couvercle 3 alors que le couvercle 2 se trouve en position de pré-verrouillage et que le verrouillage n'est pas encore effectué, le couvercle 2 basculera, exclusivement sous l'effet de son propre poids, dans la cuve 7, en direction du fond 7A de cette dernière, jusqu'à atteindre la position stable de retenue dans laquelle le moyen de retenue maintient automatiquement, par lui-même, le couvercle 2 à distance du fond 7A, en empêchant ledit couvercle 2 de venir au contact du fond 7A.

Dans cet exemple de réalisation, qui est illustré aux figures, les position de pré-verrouillage et position stable de retenue sont différentes. Il est cependant tout à fait envisageable, sans pour autant que l'on sorte du cadre de l'invention, que lesdites position de pré-verrouillage et position stable de retenue soient confondues, auquel cas le couvercle 2 n'a pas besoin de se déplacer de façon significative pour passer de sa position de pré-verrouillage à sa position stable de retenue.

Avantageusement, le moyen de retenue comprend des première et deuxième conformations complémentaires de retenue attachées respectivement au sous-ensemble de couvercle et au sous-ensemble de cuve et qui sont de préférence respectivement formées directement par un ou plusieurs des éléments composant respectivement le sous-ensemble de couvercle et le sous-ensemble de cuve.

Dans ce mode de réalisation illustré aux figures, l'atteinte de ladite position stable de retenue par ledit couvercle 2 correspond à un engagement mutuel des première et deuxième conformations complémentaires pour maintenir le couvercle 2 à distance du fond 7A. Ainsi, l'action du blocage en position stable de retenue effectuée par le moyen de retenue résulte avantageusement d'une interaction entre la première conformation de retenue portée par le sous-ensemble de couvercle et la deuxième conformation de retenue portée par le sous-ensemble de cuve.

Avantageusement, ladite première conformation est au moins en partie formée par le bras 6 flexible, tandis que ladite deuxième conformation est au moins en partie formée par ledit support 12. Cela signifie dans ce cas que le moyen de retenue comprend des portions du bras 6 flexible et du support 12 qui interagissent mutuellement pour assurer la fonction de retenue du couvercle 2 dévolue au moyen de retenue. À cet effet, le bras 6 présente avantageusement une première portion 60 de section localement réduite, qui contribue à former ladite première conformation. Avantageusement, le support 12 comprend quant à lui un siège 120 destiné à recevoir ladite première portion 60 lorsque le couvercle 2 se trouve dans sa position de pré-verrouillage, ledit siège 120 contribuant à former ladite deuxième conformation. Ainsi, lorsque le couvercle 2 se trouve dans sa position de pré-verrouillage, la première portion 60 du bras 6 vient reposer en appui libre sur une surface d'appui correspondante du support 12 qui constitue le siège 120.

Avantageusement, ladite première portion 60 est formée par au moins une première échancrure 60A ménagée dans le bras 6 et délimitée par un bord d'échancrure 60B. De préférence, la première échancrure 60A est formée par une découpe localisée de l'un des bords latéraux du bras 6 (lequel est formé en l'espèce par une lame ressort). Par exemple, ladite première échancrure 60A peut présenter une forme de découpe arrondie, avec un profil en arc de cercle, comme illustré aux figures. Dans ce cas, le bord d'échancrure 60B correspondant se présente sensiblement sous la forme d'une surface voûtée dont la hauteur correspond à l'épaisseur E du bras 6.

Dans le mode de réalisation préférentiel illustré aux figures, ladite première portion 60 est formée par deux échancrures, savoir la première échancrure 60A évoquée précédemment et une deuxième échancrure 60C délimitée par un bord d'échancrure 60D correspondant. De préférence, comme illustré aux figures, lesdites première et deuxième échancrures 60A, 60C sont ménagées de manière symétrique sur les bords latéraux de la lame ressort formant en l'espèce le bras 6.

Ainsi, dans le mode de réalisation préférentiel illustré aux figures, le bras 6 se présente sous la forme d'une lame allongée de section sensiblement parallélépipédique constante, à l'exception de la première portion 60 qui forme une zone de section localement réduite, de sorte qu'au niveau de la première portion 60 la largeur de la lame formant le bras 6 est inférieure à la largeur du reste de la lame, en dehors de la première portion 60. Le siège 120 comprend quant à lui d'une part un fond 120A et d'autre part au moins un premier ergot 120B qui s'élève verticalement à partir dudit fond 120A du siège 120. Le premier ergot 120B forme ainsi une protubérance destinée à coopérer avec la première portion 60. Plus précisément, le premier ergot 120B est destiné à venir pénétrer dans la première échancrure 60A lorsque la première portion 60 est reçue par le siège 120. En d'autres termes, l'autocuiseur 1 est avantageusement conçu pour que lorsque le couvercle 2 se trouve dans sa position de pré-verrouillage, le premier ergot 120B soit reçu dans la première échancrure 60A.

Dans ce mode de réalisation, la première conformation du moyen de retenue inclut avantageusement le bord d'échancrure 60B de la première échancrure 60A, tandis que la deuxième conformation du moyen de retenue inclut quant à elle le premier ergot 120B précité. De préférence, le siège 120 comprend un deuxième ergot 120C qui s'élève lui aussi sensiblement verticalement à partir du fond 120A. Plus précisément, lesdits premier ergot 120B et deuxième ergot 120C s'élèvent à chaque extrémité du fond 120A du siège 120, de telle sorte que ce dernier présente sensiblement un profil en U avec le fond 120A formant l'âme du U tandis que les premier et deuxième ergots 120B, 120C forment les bras du U. Les premier et deuxième ergots 120B, 120C forment ainsi des montants latéraux qui font saillie du fond 120A de part et d'autre de ce dernier, comme illustré aux figures, de sorte que lorsque le couvercle 2 se trouve en position de pré-verrouillage, les premier et deuxième ergots 120B, 120C pénètrent respectivement dans les première et deuxième échancrures 60A, 60C (cf. figure 4). Dans ce mode de réalisation préférentiel, la distance séparant chacun desdits premier et deuxième ergots 120B, 120C est avantageusement légèrement supérieure à la largeur localement réduite du bras 6 flexible, au niveau de la première portion 60.

Cela permet l'insertion ajustée du bras 6, au niveau de la première portion 60, dans et sur le siège 120, le bras 6 reposant en appui libre contre le fond 120A du siège 120. Ainsi, le bras 6 flexible ne peut avantageusement être reçu dans le siège 120, c'est-à-dire venir en appui libre contre le fond 120A de ce dernier, que si la première portion 60 se trouve en regard, c'est-à-dire au droit, dudit siège 120, avec les première et deuxième échancrures 60A, 60C positionnées au droit des protubérances complémentaires formées respectivement par les premier et deuxième ergots 120B, 120C. Cette mise en correspondance de la première portion 60 de largeur réduite du bras 6 avec le siège 120 (qui présente en l'espèce une forme sensiblement concave, avec un profil en U comme exposé précédemment), permet d'insérer localement le bras 6 entre les premier et deuxième ergots 120B, 120C, ce qui a pour effet de verrouiller longitudinalement en position le bras 6 relativement au support 12. L'utilisateur peut ainsi aisément positionner le couvercle 2 en position de pré-verrouillage, puisque la position de pré-verrouillage correspond à la position d'inter-verrouillage du bras 6 et du support 12 au moyen de la coopération décrite ci-avant des premier et deuxième ergots 120B, 120C avec respectivement les première et deuxième échancrures 60A, 60C. Afin d'établir un contact mécanique suffisant entre chaque ergot 120B, 120C et les bords d'échancrures correspondants 60B, 60D, la hauteur de chaque ergot 120B, 120C correspond sensiblement à l'épaisseur E du bras 6, comme illustré aux figures. Les première et deuxième échancrures 60A, 60C, ainsi que les premier et deuxième ergots 120B, 120C jouent ainsi avantageusement le rôle d'un organe de verrouillage longitudinal du sous-ensemble de couvercle lorsque ce dernier se trouve dans sa position de pré-verrouillage.

Les première et deuxième échancrures 60A, 60C, ainsi que les premier et deuxième ergots 120B, 120C contribuent également à former le moyen de retenue évoqué précédemment. En effet, lorsque le couvercle 2 se trouve dans sa position de pré-verrouillage illustrée à la figure 1, les premier et deuxième ergots 120B, 120C engagent respectivement les première et deuxième échancrures 60A, 60C, comme illustré à la figure 4.

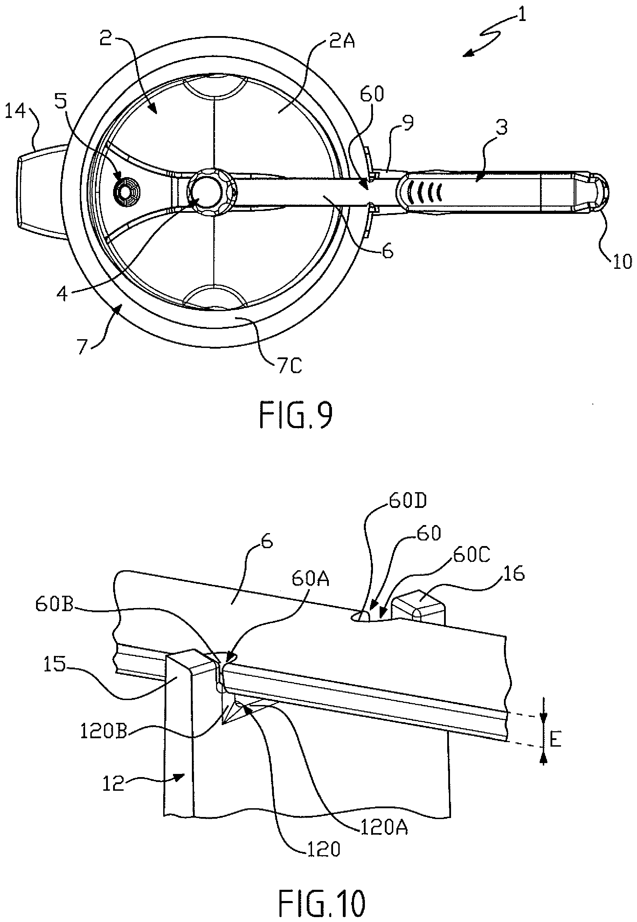

Si pour une raison pour une autre la poignée de couvercle 3 échappe à l'utilisateur, alors que les moyens de verrouillage complémentaires 10, 11 ne coopèrent pas (comme illustré à la figure 1), le sous-ensemble de couvercle va basculer vers l'intérieur de la cuve 7, en direction du fond 7A de cette dernière. Ce basculement correspond en l'espèce à un pivotement du sous-ensemble de couvercle qui entraîne, par effet de levier, le pivotement vers le haut de la première portion 60. Toutefois, la course du couvercle 2 en direction du fond 7A de la cuve 7 est stoppée grâce au moins à la coopération de chaque bord d'échancrure 60B, 60D avec chacun des premier et deuxième ergots correspondants 120B, 120C. Ainsi, le bras 6 reste accroché au siège 120 par l'intermédiaire des bords d'échancrures 60B, 60D dont une zone inférieure vient en appui contre une zone supérieure correspondante des premier et deuxième ergots 120B, 120C (cf. figure 10).

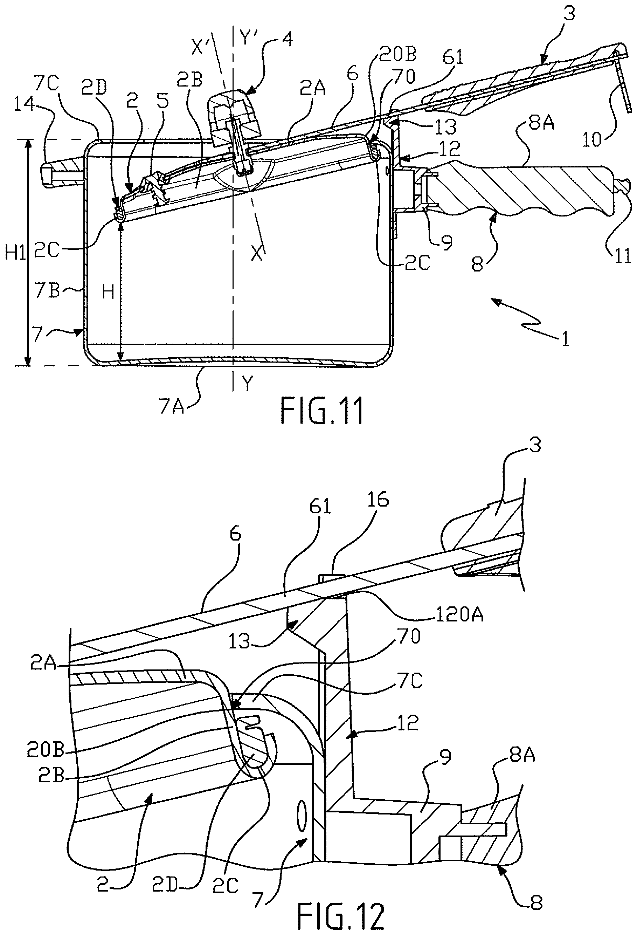

Avantageusement, l'extrémité supérieure libre de la patte qui constitue préférentiellement le support 12 forme le siège 120 susvisé. Le support 12 comprend également dans ce cas un éperon 13 qui fait saillie transversalement de ladite patte pour former une surface d'appui 13A s'étendant sensiblement dans le prolongement du siège 120. Plus précisément, la surface d'appui 13A s'étend en direction du centre de l'autocuiseur 1, matérialisé par les axes centraux X-X', Y-Y'. De préférence, la deuxième conformation du moyen de retenue inclut ladite surface d'appui 13A, tandis que la première conformation du moyen de retenue inclut une deuxième portion 61 du bras 6 conçue pour venir en appui contre ladite surface d'appui 13A lorsque le couvercle 2 se trouve dans sa position stable de retenue. Avantageusement, ladite surface d'appui 13A est légèrement inclinée vers le bas par rapport à la surface d'appui définie par le fond 120A du siège 120. Grâce à cette caractéristique, le point d'appui du sous-ensemble de couvercle sur le support 12 peut être décalé en direction du centre de l'autocuiseur 1 lorsque le couvercle 2 passe de sa position de pré-verrouillage à sa position stable de retenue. En effet, lorsque le couvercle 2 se trouve en position de pré-verrouillage, le bras 6 repose en appui libre, au niveau de sa première portion 60, contre le fond 120A du siège 120. Dans cette position de pré-verrouillage, le bras 6 ne vient sensiblement pas en contact avec la surface d'appui 13A réalisée par l'éperon 13, comme cela est visible notamment sur la figure 5. En revanche, le basculement du couvercle 2 de sa position de pré-verrouillage à sa position stable de retenue entraîne le pivotement du bras 6 qui cessera alors d'appuyer sur le fond 120A pour venir en appui contre la surface d'appui 13A (cf. figures 11 et 12 par exemple), selon une incidence réglée par la propre inclinaison vers le bas de la surface d'appui 13A.

De façon particulièrement avantageuse, la surface d'appui 13A est conformée pour que lorsque le bras 6 vient en butée contre elle, du fait du déplacement du couvercle 2 de sa position de pré-verrouillage à sa position stable de retenue, les bords d'échancrures 60B, 60D restent au contact des premier et deuxième ergots correspondants 120B, 120C, pour empêcher le sous-ensemble de couvercle de glisser complètement dans la cuve 7, comme exposé ci-avant.

De façon préférentielle, une portion 20B du bord tombant 2B du couvercle 2, situé au droit du bras 6, est par ailleurs conçue pour venir en appui, par l'intérieur de la cuve 7, contre une portion correspondante 70 du bord rentrant 7C de la cuve 7 lorsque le couvercle 2 se trouve dans sa position stable de retenue, lesdites portions 20B, 70 de bord tombant et de bord rentrant contribuant à former respectivement lesdites première et deuxième conformations.

Ainsi, dans le mode de réalisation particulièrement avantageux illustré aux figures, la coopération des première et deuxième conformations génère, lorsque le couvercle 2 se trouve dans sa position stable de retenue, au moins trois zones d'accrochage distinctes permettant de retenir le couvercle à distance du fond 7A et correspondant en l'espèce :
- à l'appui des bords d'échancrures 60B, 60D contre les premier et deuxième ergots 120B, 120C ;
- à l'appui de la deuxième portion 61 du bras 6 contre la surface d'appui 13A de l'éperon 13 ;
- et à l'appui de la portion 20B de bord tombant contre la portion 70 de bord rentrant.

Dans ce mode de réalisation préférentiel, le couvercle 2 peut ainsi basculer spontanément en direction de l'intérieur de la cuve 7 et du fond 7A de cette dernière, sous l'effet de son propre poids. Ce basculement conduit le bras 6 à pivoter jusqu'à une inclinaison dans laquelle le sous-ensemble de couvercle est automatiquement bloqué en position par l'interaction conjointe des bords d'échancrures 60B, 60D avec les premier et deuxième ergots 120B, 120C, de la deuxième portion 61 du bras 6 avec la surface d'appui 13A de l'éperon 13, et de la portion 20B de bord tombant avec la portion 70 de bord rentrant.

De préférence, le support 12 est également conformé pour constituer un organe de guidage latéral destiné à coopérer avec le bras 6 pour faciliter l'atteinte de la position de pré-verrouillage. Avantageusement, l'organe de guidage latéral en question est formé par deux excroissances 15, 16 qui s'élèvent par exemple à partir de chacun desdits premier et deuxième ergots 120B, 120C, comme illustré aux figures. Ces deux excroissances 15, 16 qui surmontent respectivement les premier et deuxième ergots 120B, 120C sont avantageusement séparées d'une distance qui est légèrement supérieure à la largeur que présente le bras 6 en dehors de la première portion 60 de ce dernier, afin ainsi de recevoir de façon ajustée le bras 6 entre lesdites excroissances 15,16. Le bras 6, ainsi reçu entre les excroissances 15, 16, peut alors glisser longitudinalement entre lesdites excroissances 15,16 et en appui sur le sommet des premier et deuxième ergots 120B, 120C jusqu'à réception de la première portion 60 par le siège 120 (qui correspond à un engagement des première et deuxième échancrures 60A, 60B par les premier et deuxième ergots 120B, 120C).

Ainsi, dans le mode de réalisation avantageux illustré aux figures, l'autocuiseur 1 comporte un organe de guidage latéral (excroissances 15, 16), un organe de verrouillage longitudinal (formé par les premier et deuxième ergots 120B, 120C d'une part et les première et deuxième échancrures 60A, 60B d'autre part), ainsi qu'un moyen de retenue incluant en l'espèce :
- lesdites première et deuxième échancrures 60A, 60B, ainsi que lesdits premier et deuxième ergots 120B, 120C,
- ladite surface d'appui 13A réalisée par l'éperon 13 et ladite deuxième portion 61 dudit bras 6,
- lesdites portions 20B, 70 de bord tombant et de bord rentrant.

De façon particulièrement avantageuse, l'extrémité libre de la patte rigide formant le support 12 comporte avantageusement une zone centrale plane (correspondant au fond 120A du siège 120) à chaque extrémité de laquelle s'élève, de façon symétrique et divergente, deux bordures en escalier, avec chacune une première marche correspondant respectivement aux premier et deuxième ergots 120B, 120C et une seconde marche correspondant respectivement aux excroissances 15, 16. Dans ce cas, le support 12 forme à la fois l'organe de guidage latéral, l'organe de verrouillage longitudinal et contribue à former le moyen de retenue.

Le fonctionnement de la variante illustrée aux figures est le suivant.

Dans un premier temps, l'utilisateur insère le couvercle 2 dans la cuve 7, en manipulant le couvercle 2 au moyen de la poignée de couvercle 3. L'utilisateur engage alors le bras flexible 6 entre les excroissances 15, 16, de telle sorte que le bras flexible 6 repose sur les premier et deuxième ergots 120B, 120C tout en ayant la faculté de glisser longitudinalement entre les excroissances 15, 16. L'utilisateur n'a alors plus qu'à faire glisser le bras 6 entre les excroissances 15, 16, en appui sur les premier et deuxième ergots 120B, 120C, jusqu'à amener les première et deuxième échancrures 60A, 60C au droit du support 12. Dans cette configuration, le bras 6 peut alors descendre pour être localement reçu dans le siège 120, ce qui verrouille longitudinalement le bras 6 en position, grâce à l'insertion des premier et deuxième ergots 120B, 120C dans les première et deuxième échancrures 60A, 60C. Le couvercle 2 se trouve alors dans sa position de pré-verrouillage. À ce stade, l'utilisateur est contraint de maintenir le couvercle 2 dans cette position de pré-verrouillage en agissant sur la poignée de couvercle 3 pour s'opposer au poids du couvercle 2 qui a tendance à faire basculer ce dernier vers l'intérieur de la cuve 7. Dans l'hypothèse où à cet instant la poignée de couvercle 3 échappe à l'utilisateur, le couvercle 2 basculera alors en direction du fond 7 sous l'effet de son propre poids, ce qui entraînera par effet de levier le pivotement vers le haut du bras 6 et de la poignée de couvercle 3 jusqu'à immobilisation du sous-ensemble de couvercle dans la position inclinée illustré à la figure 11. Cette immobilisation est en l'espèce obtenue par la coopération de trois points d'accroche, qui correspondent à l'interface d'appui du sous-ensemble de couvercle avec le sous-ensemble de cuve, et qui sont respectivement situés au niveau des premier et deuxième ergots 120B, 120C, au niveau de la surface d'appui 13A et au niveau du bord rentrant 7C, et plus précisément de la portion 70 du bord rentrant 7C qui se trouve au droit du support 12.

Le couvercle 2 se trouve alors retenu dans sa position stable de retenue, qui évite au couvercle 2 de venir en contact avec les aliments susceptibles d'être contenus dans la cuve 7.

L'invention permet ainsi de conférer à l'autocuiseur 1 un caractère particulièrement ergonomique et intuitif, qui améliore le confort et la sécurité d'utilisation de l'autocuiseur en limitant les risques de voir le couvercle 2 chuter au fond de la cuve 7 avec tous les inconvénients qui en découleraient.

## Revendications

1. - Autocuiseur (1) à trou d'homme comprenant un couvercle rentrant (2), une poignée de couvercle (3) attachée audit couvercle (2), une cuve de cuisson (7) pourvue d'un fond (7A), ainsi qu'une poignée de cuve (8) attachée à ladite cuve (7), lesdites poignées de couvercle (3) et de cuve (8) étant pourvues de moyens de verrouillage complémentaires (10,11) capables de coopérer, lorsque le couvercle (2) se trouve dans une position de pré-verrouillage dans laquelle les poignées de cuve (8) et de couvercle (3) sont sensiblement superposées, pour verrouiller le couvercle (2) relativement à la cuve (7) afin d'autoriser l'autocuiseur (1) à monter en pression, ledit autocuiseur (1) étant **caractérisé en ce qu'**il comprend également un moyen de retenue qui autorise ledit couvercle (2) à atteindre spontanément, à partir de sa position de pré-verrouillage et en l'absence de coopération desdits moyens de verrouillage complémentaires (10,11), une position stable de retenue dans laquelle ledit moyen de retenue maintient par lui-même le couvercle (2) à distance dudit fond (7A).

2. - Autocuiseur (1) à trou d'homme selon la revendication 1 **caractérisé en ce que** ladite position de pré-verrouillage est une position instable, de sorte que le maintien dudit couvercle (2) en position de pré-verrouillage nécessite, tant que lesdits moyens de verrouillage complémentaires (10,11) ne coopèrent pas, l'application d'un effort de maintien sur la poignée de couvercle (3) pour empêcher le couvercle (2) de basculer en direction du fond (7A) sous l'effet de son propre poids.

3. - Autocuiseur (1) selon la revendication 1 ou 2 **caractérisé en ce que** lesdites position de pré-verrouillage et position stable de retenue sont distinctes, le couvercle (2) étant conçu pour passer de la position de pré-verrouillage à la position stable de retenue par un mouvement qui inclut un basculement en direction du fond (7A) sous l'effet du poids du couvercle (2).

4. - Autocuiseur (1) selon l'une des revendications précédentes **caractérisé en ce que** lesdits fond (7A) et couvercle (2) s'étendent selon des plans moyens d'extension respectifs qui sont inclinés l'un par rapport à l'autre lorsque le couvercle (2) se trouve dans ladite position stable de retenue.

5. - Autocuiseur (1) selon l'une des revendications précédentes **caractérisé en ce qu'**il comprend d'une part un sous-ensemble unitaire de couvercle incluant au moins lesdits couvercle (2) et poignée de couvercle (3), et d'autre part un sous-ensemble unitaire de cuve incluant au moins lesdites cuve (7) et poignée de cuve (8), ledit moyen de retenue comprenant quant à lui des première et deuxième conformations complémentaires de retenue attachées respectivement au sous-ensemble de couvercle et au sous-ensemble de cuve, l'atteinte de ladite position stable de retenue par ledit couvercle (2) correspondant à un engagement mutuel desdites première et deuxième conformations complémentaires pour maintenir le couvercle (2) à distance dudit fond (7A).

6. - Autocuiseur (1) selon la revendication 5 **caractérisé en ce que** la cuve (7) comporte un bord rentrant (7C) qui délimite une ouverture de forme sensiblement ovale, tandis que le couvercle (2) comprend un bord tombant (2B) dont une portion (20B), située au droit dudit bras, est conçu pour venir en appui par l'intérieur de la cuve (7) contre une portion correspondante (70) dudit bord rentrant (7C) lorsque le couvercle (2) se trouve dans sa position stable de retenue, lesdites portion (20B) de bord tombant et de bord rentrant contribuant à former respectivement lesdites première et deuxième conformations.

7. - Autocuiseur (1) selon l'une des revendications précédentes **caractérisé en ce qu'**il comprend un bras (6) flexible, de préférence formé par une lame ressort, ladite poignée de couvercle (3) étant attachée au couvercle (2) par ledit bras (6) flexible, ledit autocuiseur (1) comprenant également un support (12) attaché à la cuve (7), sur et contre lequel ledit bras (6) est destiné à reposer localement lorsque ledit couvercle (2) se trouve dans sa position de pré-verrouillage.

8. - Autocuiseur (1) selon les revendications 5 et 7 **caractérisé en ce que** ladite première conformation est au moins en partie formée par ledit bras (6) flexible, tandis que ladite deuxième conformation est au moins en partie formée par ledit support (12).

9. - Autocuiseur (1) selon la revendication 8 **caractérisé en ce que** ledit bras (6) présente une première portion (60) de section localement réduite qui contribue à former ladite première conformation, ledit support (12) comprenant quant à lui un siège (120) destiné à recevoir ladite première portion (60) lorsque le couvercle (2) se trouve dans sa position de pré-verrouillage, ledit siège (120) contribuant à former ladite deuxième conformation.

10. -Autocuiseur (1) selon la revendication 9 **caractérisé en ce que** ladite première portion (60) est formée par au moins une première échancrure (60A) ménagée dans ledit bras (6) et délimitée par un bord d'échancrure (60B), ledit siège (120) comprenant quant à lui d'une part un fond (120A) et d'autre part au moins un premier ergot (120B) qui s'élève verticalement à partir dudit fond (120A), ledit premier ergot (120B) étant destiné à venir pénétrer dans ladite première échancrure (60A) lorsque la première portion (60) est reçue par ledit siège (120), ladite première conformation incluant ledit bord d'échancrure (60B) tandis que ladite deuxième conformation inclut ledit premier ergot (120B).

11. -Autocuiseur (1) selon la revendication 9 ou 10 **caractérisé en ce que** ledit support (12) comprend une patte qui s'étend sensiblement verticalement entre une extrémité inférieure solidaire de la cuve (7) et une extrémité supérieure libre qui forme ledit siège (120), ledit support (12) comprenant également un éperon (13) qui fait saillie transversalement de ladite patte pour former une surface d'appui (13A) s'étendant dans le prolongement dudit siège (120), ladite deuxième conformation incluant ladite surface d'appui (13A), tandis que ladite première conformation inclut une deuxième portion (61) dudit bras (6) conçue pour venir en appui contre ladite surface d'appui (13A) lorsque ledit couvercle (2) se trouve dans sa position stable de retenue.

12. -Autocuiseur (1) selon l'une des revendications 7 à 11 **caractérisé en ce que** ladite poignée de cuve (8) s'étend entre une première extrémité attachée à la cuve (7) et une deuxième extrémité libre, ledit support (12) étant attachée à la poignée de cuve (8) au niveau de la première extrémité de celle-ci.

## Patentansprüche

1. - Schnellkochtopf (1) mit Sichtfenster, umfassend einen einspringenden Deckel (2), einen Deckelgriff (3), der an dem Deckel (2) befestigt ist, einen Kochbehälter (7) mit einem Boden (7A) sowie einen Behältergriff (8), der an dem Behälter (7) befestigt ist, wobei der Deckeigriff (3) und der Behältergriff (8) mit komplementären Verriegelungsmitteln (10, 11) versehen sind, die geeignet sind, zusammenzuwirken, wenn sich der Deckel (2) in einer Vorverriegelungsposition befindet, in welcher der Behältergriff (8) und der Deckelgriff (3) im Wesentlichen übereinander liegen, um den Deckel (2) in Bezug auf den Behälter (7) zu verriegeln, um dem Schnellkochtopf (1) zu erlauben, Druck aufzubauen, wobei der Schnellkochtopf (1) **dadurch gekennzeichnet ist, dass** er auch ein Rückhaltemittel umfasst, das dem Deckel (2) erlaubt, ausgehend von seiner Vorverriegelungsposition und bei Nichtvorliegen des Zusammenwirkens dieser komplementären Verriegelungsmittel (10, 11) spontan eine stabile Rückhalteposition zu erreichen, in der das Rückhaltemittel selbst den Deckel (2) auf Abstand vom Boden (7A) hält.

2. - Schnellkochtopf (1) mit Sichtfenster nach Anspruch 1, **dadurch gekennzeichnet, dass** die Vorverriegelungsposition eine instabile Position ist, so dass das Halten des Deckels (2) in der Vorverriegelungsposition, solange die komplementären Verriegelungsmittel (10, 11) nicht zusammenwirken, das Aufbringen einer Haltekraft auf den Deckelgriff (3) erfordert, um den Deckel (2) daran zu hindern, unter der Wirkung seines Eigengewichts in Richtung des Bodens (7A) zu kippen.

3. - Schnellkochtopf (1) nach Anspruch 1 oder 2, **dadurch gekennzeichnet, dass** die Vorverriegelungsposition und die stabile Rückhalteposition verschieden sind, wobei der Deckel (2) so gestaltet ist, dass er aus der Vorverriegelungsposition in die stabile Rückhalteposition mit einer Bewegung übergeht, die ein Kippen in Richtung des Bodens (7A) unter der Wirkung des Gewichts des Deckels (2) beinhaltet.

4. - Schnellkochtopf (1) nach einem der vorhergehenden Ansprüche, **dadurch gekennzeichnet, dass** sich der Boden (7A) und der Deckel (2) entlang jeweiliger mittlerer Ausdehnungsebenen erstrecken, die zueinander geneigt sind, wenn sich der Deckel (2) in der stabilen Rückhalteposition befindet.

5. - Schnellkochtopf (1) nach einem der vorhergehenden Ansprüche, **dadurch gekennzeichnet, dass** er zum einen eine einheitliche Deckelunteranordnung, die mindestens den Deckel (2) und den Deckelgriff (3) beinhaltet, und zum anderen eine einheitliche Behälterunteranordnung, die mindestens den Behälter (7) und den Behältergriff (8) beinhaltet, umfasst, wobei das Rückhaltemittel wiederum erste und zweite komplementäre Rückhaltegebilde umfasst, die jeweils an der Deckelunteranordnung und an der Behälterunteranordnung befestigt sind, wobei das Erreichen der stabilen Rückhalteposition durch den Deckel (2) einem wechselseitigen Eingreifen der ersten und zweiten komplementären Gebilde entspricht, um den Deckel (2) auf Abstand vom Boden (7A) zu halten.

6. - Schnellkochtopf (1) nach Anspruch 5, **dadurch gekennzeichnet, dass** der Behälter (7) einen einspringenden Rand (7C) umfasst, der eine im Wesentlichen ovale Öffnung begrenzt, während der Deckel (2) einen abfallenden Rand (2B) umfasst, dessen einer Abschnitt (20B), der an dem Arm angeordnet ist, so gestaltet ist, dass er vom Inneren des Behälters (7) aus an einem entsprechenden Abschnitt (70) des einspringenden Rands (7C) zur Anlage kommt, wenn sich der Deckel (2) in seiner stabilen Rückhalteposition befindet, wobei die Abschnitte (20B) des abfallenden Rands und des einspringenden Rands dazu beitragen, die jeweils ersten und zweiten Gebilde zu bilden.

7. - Schnellkochtopf (1) nach einem der vorhergehenden Ansprüche, **dadurch gekennzeichnet, dass** er einen flexiblen Arm (6) umfasst, der bevorzugt durch ein Federblatt gebildet wird, wobei der Deckelgriff (3) am Deckel (2) über den flexiblen Arm (6) befestigt ist, wobei der Schnellkochtopf (1) auch einen Halter (12) umfasst, der am Behälter (7) befestigt ist, auf und an dem sich der Arm (6) lokal abstützt, wenn sich der Deckel (2) in der Vorverriegelungsposition befindet.

8. - Schnellkochtopf (1) nach einem der Ansprüche 5 und 7, **dadurch gekennzeichnet, dass** das erste Gebilde mindestens teilweise aus dem flexiblen Arm (6) gebildet wird, während das zweite Gebilde mindestens teilweise aus dem Halter (12) gebildet wird.

9. - Schnellkochtopf (1) nach Anspruch 8, **dadurch gekennzeichnet, dass** der Arm (6) einen ersten Abschnitt (60) mit lokal verjüngtem Querschnitt aufweist, der dazu beiträgt, das erste Gebilde zu bilden, wobei der Halter (12) wiederum einen Sitz (120) umfasst, der dazu bestimmt ist, den ersten Abschnitt (60) aufzunehmen, wenn sich der Deckel (2) in der Vorverriegelungsposition befindet, wobei der Sitz (120) dazu beiträgt, das zweite Gebilde zu bilden.

10. - Schnellkochtopf (1) nach Anspruch 9, **dadurch gekennzeichnet, dass** der erste Abschnitt (60) aus mindestens einer ersten Aussparung (60A) gebildet wird, die in dem Arm (6) angeordnet ist und durch einen Aussparungsrand (60B) begrenzt wird, wobei der Sitz (120) wiederum zum einen einen Boden (120A) und zum anderen mindestens einen Vorsprung (120B), der sich vertikal von dem Boden (120A) aus erhebt, umfasst, wobei der erste Vorsprung (120B) dazu bestimmt ist, in die erste Aussparung (60A) einzudringen, wenn der erste Abschnitt (60) von dem Sitz (120) aufgenommen wird, wobei das erste Gebilde den Aussparungsrand (60B) beinhaltet, während das zweite Gebilde den ersten Vorsprung (120B) beinhaltet.

11. - Schnellkochtopf (1) nach Anspruch 9 oder 10, **dadurch gekennzeichnet, dass** der Halter (12) eine Stütze umfasst, die sich im Wesentlichen vertikal zwischen einem unteren, fest mit dem Behälter (7) verbundenen Ende und einem oberen freien Ende, das den Sitz (120) bildet, erstreckt, wobei der Halter (12) auch einen Sporn (13) umfasst, der quer aus der Stütze vorspringt, um eine Auflagefläche (13A) zu bilden, die sich in der Verlängerung des Sitzes (120) erstreckt, wobei das zweite Gebilde die Auflagefläche (13A) beinhaltet, während das erste Gebilde einen zweiten Abschnitt (61) des Arms (6) beinhaltet, der so gestaltet ist, dass er an der Auflagefläche (13A) zur Anlage kommt, wenn sich der Deckel (2) in der stabilen Rückhalteposition befindet.

12. - Schnellkochtopf (1) nach einem der Ansprüche 7 bis 11, **dadurch gekennzeichnet, dass** sich der Behältergriff (8) zwischen einem ersten, am Behälter (7) befestigten Ende und einem zweiten freien Ende erstreckt, wobei der Halter (12) am Behältergriff (8) auf Höhe von dessen erstem Ende befestigt ist.

## Claims

1. - A manhole pressure cooker (1) comprising an internal-mount lid (2), a lid handle (3) fastened to said lid (2), a cooking vessel (7) provided with a bottom (7A), and a vessel handle (8) fastened to said vessel (7), said lid handle (3) and said vessel handle (8) being provided with complementary locking means (10, 11) capable of co-operating, when the lid (2) is in a pre-locking position in which the vessel handle (8) and the lid handle (3) are substantially superposed, to lock the lid (2) relative to the vessel (7) in order to allow pressure to build up inside the pressure cooker (1), said pressure cooker (1) being **characterized in that** it further comprises retaining means that allow said lid (2) spontaneously to go from its pre-locking position, in the absence of co-operation between said complementary locking means (10, 11), to reach a stable retention position in which said retaining means act by themselves to keep the lid (2) some distance away from said bottom (7A).

2. - A manhole pressure cooker (1) according to claim 1, **characterized in that** said pre-locking position is an unstable position, so that, so long as the complementary locking means (10, 11) are not co-operating, holding the lid (2) in the pre-locking position requires a holding force to be applied to the lid handle (3) to prevent the lid (2) from tilting towards the bottom (7A) under its own weight.

3. - A pressure cooker (1) according to claim 1 or claim 2, **characterized in that** said pre-locking position and said stable retention position are distinct, the lid (2) being designed to go from the pre-locking position to the stable retention position by means of a movement that includes tilting towards the bottom (7A) under the effect of the weight of the lid (2).

4. - A pressure cooker (1) according to any preceding claim, **characterized in that** said bottom (7A) and said lid (2) extend in respective mean extension planes that are inclined relative to each other when the lid (2) is in said stable retaining position.

5. - A pressure cooker (1) according to any preceding claim, **characterized in that** it comprises firstly a one-piece lid subassembly including at least said lid (2) and said lid handle (3), and secondly a one-piece vessel subassembly including at least said vessel (7) and said vessel handle (8), said retaining means comprising first and second complementary retaining shaped portions carried respectively by the lid subassembly and by the vessel subassembly, said stable retention position being reached by said lid (2) corresponding to said first and second complementary shaped portions being mutually engaged to keep the lid (2) some distance away from the bottom (7A).

6. - A pressure cooker (1) according to claim 5, **characterized in that** the vessel (7) is provided with an inwardly-extending edge (7C) that defines an opening of substantially oval shape, while the lid (2) is provided with a dropped edge (2B), a portion (20B) of which that is situated in register with said arm is designed to come to bear via the inside of the vessel (7) against a corresponding portion (70) of said inwardly-extending edge (7C) when the lid (2) is in its stable retention position, said portions (20B) of dropped edge and of inwardly-extending edge contributing to forming respective ones of said first and second shaped portions.

7. - A pressure cooker (1) according to any preceding claim, **characterized in that** it is provided with a flexible arm (6) that is preferably formed by a spring blade, said lid handle (3) being fastened to the lid (2) via said flexible arm (6), said pressure cooker (1) further comprising a support (12) fastened to the vessel (7), on and against which support said arm (6) is designed to rest locally when said lid (2) is in its pre-locking position.

8. - A pressure cooker (1) according to claims 5 and 7, **characterized in that** said first shaped portion is formed at least in part by the flexible arm (6), while said second shaped portion is formed at least in part by said support (12).

9. - A pressure cooker (1) according to claim 8, **characterized in that** said arm (6) has a first portion (60) of locally reduced section that contributes to forming said first shaped portion, said support (12) including a seat (120) designed to receive said first portion (60) when the lid (2) is in its pre-locking position, said seat (120) contributing to forming said second shaped portion.

10. - A pressure cooker (1) according to claim 9, **characterized in that** said first portion (60) is formed by at least one first notch (60A) provided in said arm (6) and defined by a notch edge (60B), said seat (120) including firstly a bottom (120A) and secondly at least a first projection (120B) that extends vertically upwards from said bottom (120A), said first projection (120B) being designed to come to penetrate into said first notch (60A) when the first portion (60) is received by said seat (120), said first shaped portion including said notch edge (60B) while said second shaped portion includes said first projection (120B).

11. - A pressure cooker (1) according to claim 9 or claim 10, **characterized in that** said support (12) includes a tab that extends substantially vertically between a bottom end secured to the vessel (7) and a free top end that forms said seat (120), said support (12) also including a spur (13) that projects transversely from said tab to form a bearing surface (13A) extending in alignment with said seat (120), said second shaped portion including said bearing surface (13A), while said first shaped portion includes a second portion (61) of said arm (6) that is designed to come to bear against said bearing surface (13A) when said lid (2) is in its stable retention position.

12. - A pressure cooker (1) according to any one of claims 7 to 11, **characterized in that** said vessel handle (8) extends between a first end fastened to the vessel (7) and a free second end, said support (12) being fastened to the vessel handle (8) at the first end thereof.
